# EUROPEAN PATENT SPECIFICATION

(11) **EP 1 316 283 B1**
(45) Date of publication and mention of the grant of the patent: **15.10.2008**
(21) Application number: 02079991.2
(22) Date of filing: 29.11.2002
(51) Int. Cl.: A47J 31/40

(54) **Apparatus for preparing a beverage suitable for consumption, provided with at least one agitator**
Vorrichtung zur Herstellung eines Getränkes, mit wenigstens einem Rührwerk
Appareil de préparation d'une boisson, pourvue d'au moins un agitateur

(30) Priority: 29.11.2001 NL 1019449
(43) Date of publication of application: 04.06.2003
(73) Proprietor: Sara Lee/DE N.V., 3532 AA Utrecht (NL)
(72) Inventor: Piscaer, Petrus Josephus Carolus, 3069 LJ Rotterdam (NL)
(74) Representative: Prins, Adrianus Willem

(56) References cited:
- FR-A- 2 780 261
- GB-A- 1 369 218
- US-A- 4 185 927
- US-A- 4 193 522

## Description

The invention relates to an apparatus according to the preamble of claim 1.

Such an apparatus is known per se and is often used in places, such as companies, where every day many cups of beverage suitable for consumption, such as coffee, are consumed.

The beverage dispensing apparatus may, for instance, dispense coffee concentrate and hot water in the reservoir of the collecting dish for obtaining the coffee. These ingredients then flow from the reservoir to the at least one mixing chamber in which they are mixed with the aid of the agitator- The coffee thus obtained leaves the mixing chamber via the outflow opening and is, for instance, collected in a cup for consumption.

The collecting dish is detachably connected with the basic housing, so that the collecting dish can be removed so that it can be cleaned. Besides, the agitator then comes to lie open, so that it can also be cleaned. Subsequently, the collecting dish can be placed black.

In the drink dispensing machine according to GB 1 369 218 a collecting dish and mixing chamber are detachably connectable to a basic housing of the machine. An inner surface portion of the mixing chamber frictionally engages and seals with an O-ring fitted in a peripheral recess forming part of a protrusion on the basic housing. Sealing arrangements using O-ring seals typically offer very little latitude to accommodate misalignment.

It is a drawback of the known apparatus that when the collecting dish and mixing chamber are coupled with the basic housing sometimes no good fluid seal is present between the at least one mixing chamber and the basic housing. The result is that the beverage mixed in the at least one mixing chamber can come to leak away.

In particular, the apparatus is provided with a plurality of mixing chambers in which a plurality of agitators are accommodated. When the mixing chambers formed in the collecting dish are not well aligned with the positions of the basic housing with which the mixing chambers must be connected to obtain a good seal, leakage can also arise.

The invention intends to provide a solution to the above problem. The apparatus according to the invention is defined by the features of claim 1.

Because the annular rigid element is freely movably accommodated in the hollow space, this has the result that when the flexible annular fluid seal is not optimally centered with respect to the collecting dish and/or the basic housing, the flexible annular fluid seal substantially cannot lose its basic form because the annular rigid element keeps this form. Is, for instance, the flexible annular fluid seal deformed radially inward on one specific side of the flexible annular fluid seal, the rigid ring will be moved in the same direction, with the result that the flexible annular fluid seal is moved radially outward by the annular rigid element in a position located opposite the specific position. The flexible annular fluid seal thus keeps, at least substantially, its original form with which the sealing properties of the fluid seal are maintained.

In particular, it holds that the annular rigid element lies loose in the hollow space.

Preferably, it holds that the annular seal is connected with the basic housing and is arranged around the agitator opening. In particular, it holds in this respect that the basic housing is composed of a fixed housing and an agitator housing which are mounted together, with the agitator being connected with the agitator housing. The basic housing is then composed of a fixed housing and an agitator housing which are mounted together removably from each other. Is the agitator housing not mounted in the exactly desired position, a good fluid seal is obtained yet with the aid of the fluid seal according to the invention.

This particularly plays a part when the apparatus is provided with at least two agitators spatially separated from each other which are connected with the basic housing, the collecting dish being provided with at least two mixing chambers, in each mixing chamber one of the above agitators being accommodated, and each pair of one of the mixing chambers with associated agitator being provided with one of the above annular seals. When a number of the agitators are not mounted in the desired position, a good fluid seal is obtained yet for each pair of one of the mixing chambers with associated agitator, due to the fluid seal according to the invention.

The invention will now be explained in more detail with reference to the drawing.

In this drawing:
Fig. 1 is a rear view of a possible embodiment of a collecting dish of an apparatus according to the invention;
Fig. 2 is a front view in the direction of the arrow P according to Fig. 1 of the collecting dish according to Fig. 1;
Fig. 3 is a front view of a possible embodiment of a basic housing of the apparatus according to the invention;
Fig. 4 is a top view of the basic housing of Fig. 3 in the direction of the arrow P';
Fig. 5 is a cross-section of the collecting dish according to Fig. 1 and the basic housing according to Fig. 3 when they are attached together by rotation in the direction of the arrow P, as well as a possible embodiment of a beverage dispensing unit of the apparatus according to the invention;
Fig. 6 shows the apparatus according to Fig. 5, with the collecting dish being attached to the basic housing;
Fig. 7 shows the apparatus according to Fig. 6, with the beverage dispensing unit being brought into a condition of use;
Fig. 8 shows a detail of Fig. 7; and
Fig. 9 shows a detail of Fig. 7, with an agitator being arranged in a slightly displaced position with respect to the collecting dish.

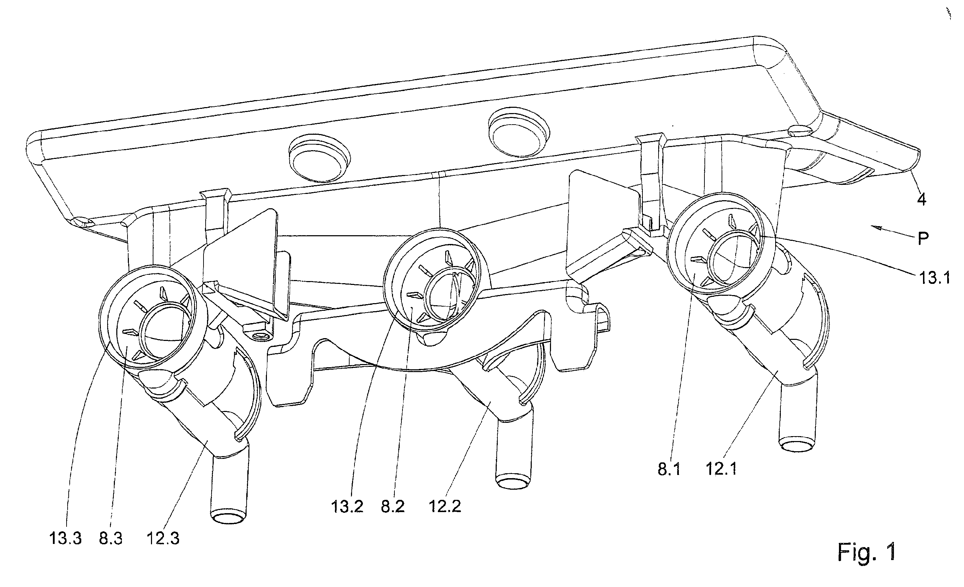

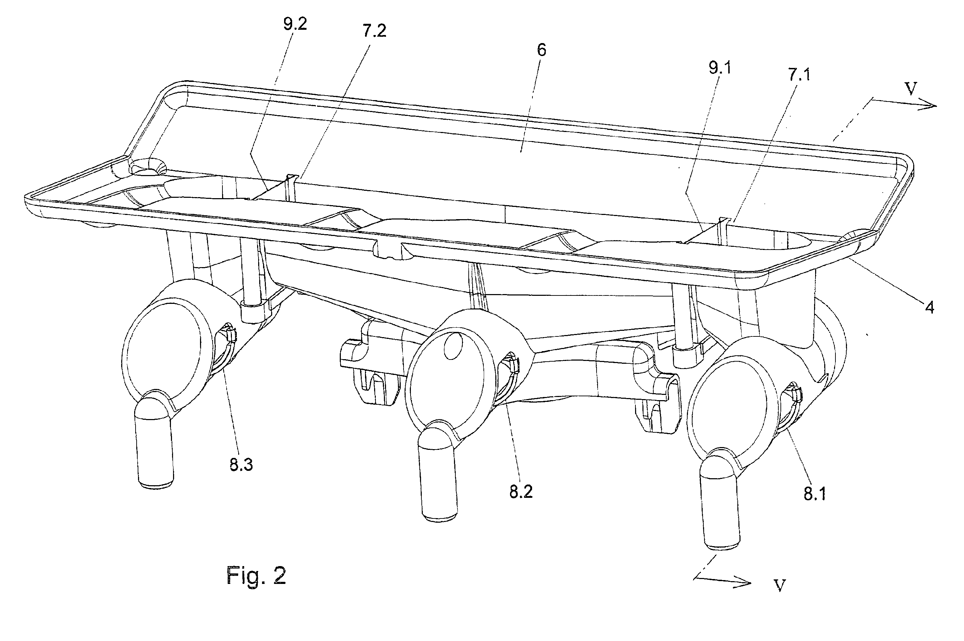

In Fig. 1, reference numeral 1 denotes an apparatus according to the invention for preparing a beverage suitable for consumption, such as coffee, milk or drinking chocolate. The apparatus 1 is provided with at least one beverage dispensing unit 2. In this example, the apparatus is provided with two beverage dispensing units 2.1 and 2.2, which are each arranged to dispense beverage and/or ingredients therefor. The apparatus is further provided with a collecting dish 4 with a reservoir 6 for collecting in the reservoir 6 ingredients to be dispensed by the beverage dispensing units 2.1 and 2.2, for preparing the beverage suitable for consumption. In this example, the beverage dispensing unit 2.1 is placed above a position 7.1 (see Fig. 2) of the collecting dish, and the beverage dispensing unit 2.2 is placed above a position 7.2 of the collecting dish 4. In each position 7.1 and 7.2 is located a fluid path selecting unit 9.1 and 9.2, respectively, as described in Netherlands patent application 1001798. In this example, the beverage dispensing unit 2.1 dispenses a coffee concentrate and hot water, and the beverage dispensing unit 2.2 dispenses a milk concentrate and hot water.

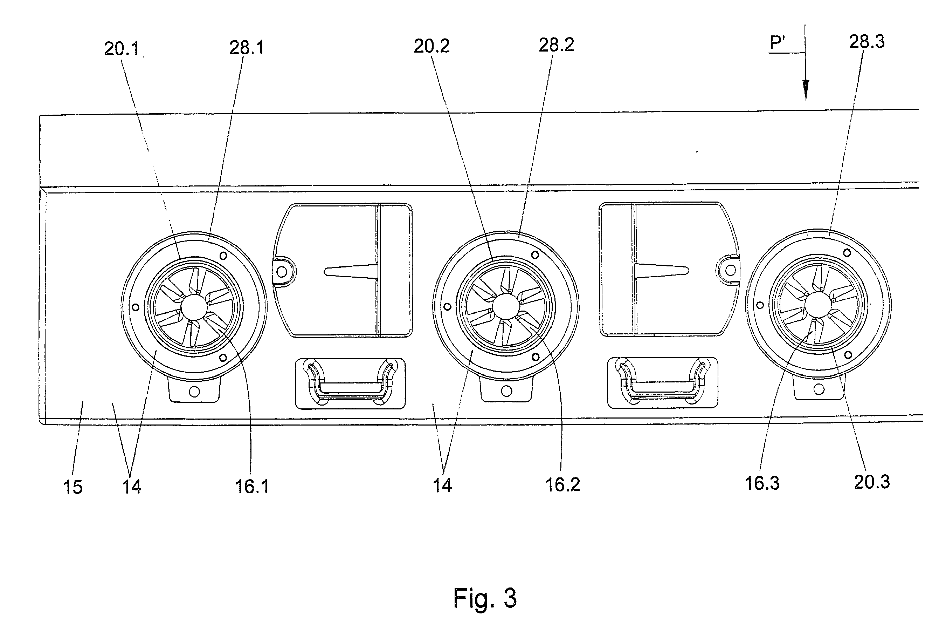

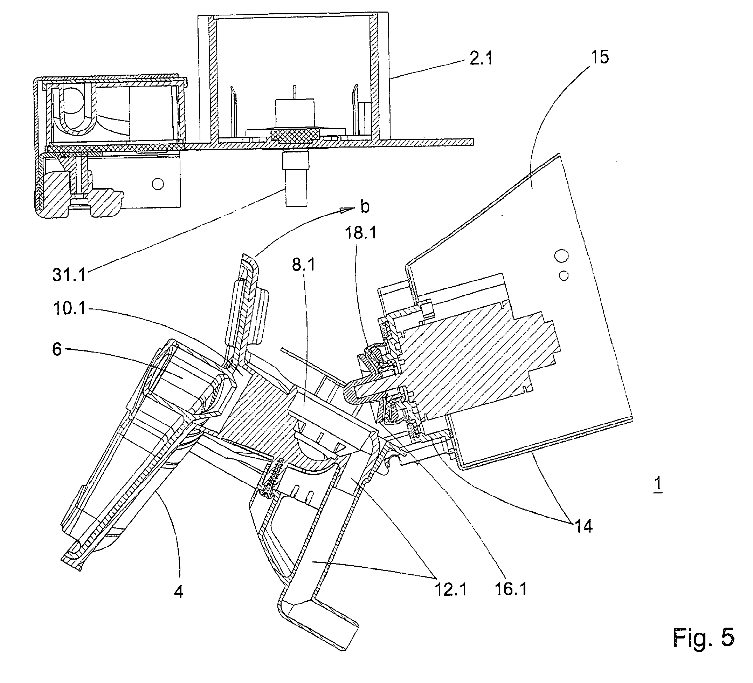

The collecting dish is further provided with, in this example, three mixing chambers 8,1, 8,2 and 8,3, each mixing chamber being provided with a fluid inflow opening 10.1, 10.2 and 10.3, respectively, which is in fluid communication with the reservoir 6 for supplying the beverage and/or ingredients therefor collected in the reservoir (see Fig. 3). Furthermore, each mixing chamber is provided with an outflow opening 12.1, 12.2 and 12.3 (see Fig. 5). Moreover, each mixing chamber is provided with an agitator opening 13.1, 13.2, 13.3 (see Fig. 1).

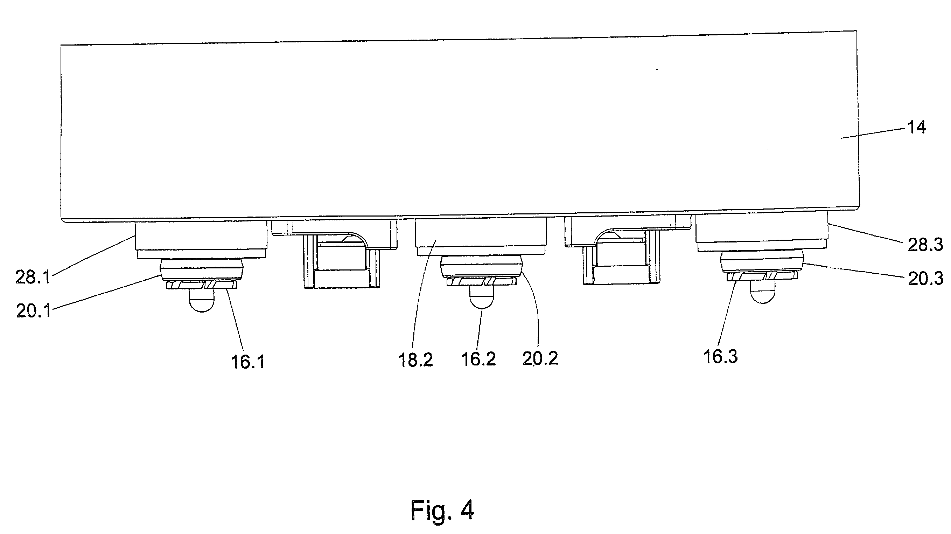

The apparatus is further provided with a basic housing 14 (see Figs. 3 and 4), to which, in this example, three agitators 16.1, 16.2 and 16.3 are attached.

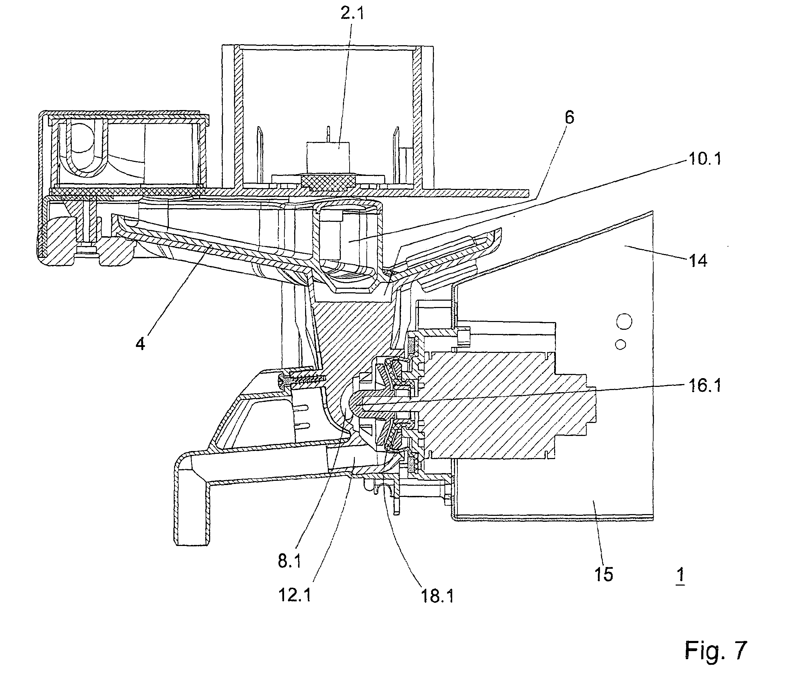

As clearly visible in Figs. 7-9, the collecting dish 4, in use, is detachably connected with the basic housing 14, such that in each mixing chamber 8.i (i=1,2,3) one of the associated agitators 16.i (i=1,2,3) is accommodated. By removing the collecting dish 4 and the basic housing 14 from each other, the agitators 16.1, 16.2 and 16.3 can leave the mixing chambers 8.1, 8,2 and 8.3 via the agitator openings 13.1, 13.2 and 13.3, respectively.

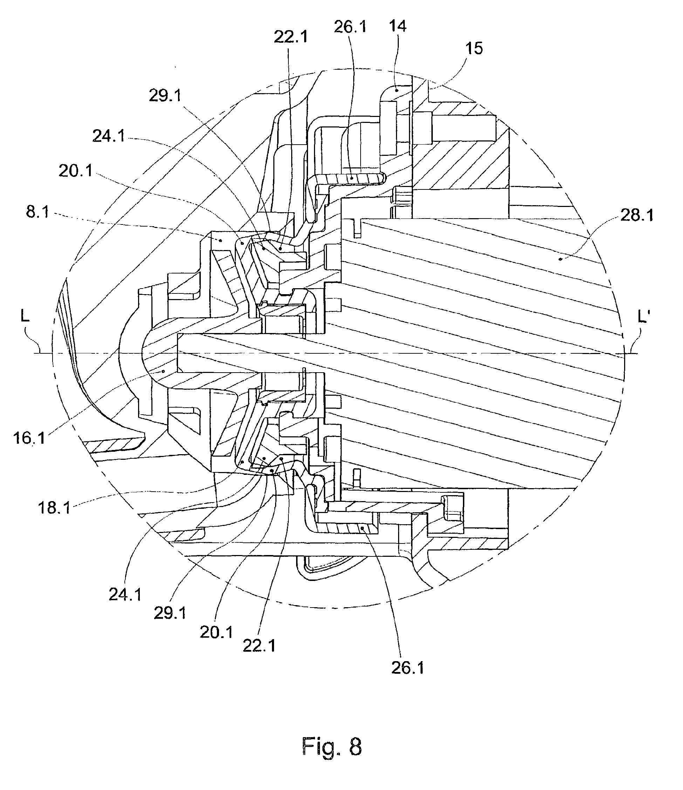

The apparatus is further provided with three fluid seals 18.1, 18,2 and 18.3, which each extend around the agitators 16.1, 16.2 and 16.3, respectively. Here the fluid seal 18.i is interposed between the mixing chamber 8.i and the basic housing 14 (i=1,2,3) to obtain a fluid-tight connection between the basic housing and the mixing chamber. Thus the mixing chamber is fluid-tightly sealed, with the understanding that fluid can be supplied via the inflow opening 10.i and can be discharged via the outflow opening 12.i. The fluid seal 18.i is, in this example, provided with a flexible annular fluid seal 20.i (see Fig. 8 for the annular seal 20.1), which is interposed between the mixing chamber 8.1 and the basic housing 14 to obtain the fluid-tight connection between the basic housing 14 and the mixing chamber 8.i. Each annular seal 20.i is of hollow design, so that it comprises an annular hollow space 22.i (22.1 in Fig. 8). The annular seal 20.i is further provided with an annular rigid element 24.i (i=1,2,3), which is freely movably accommodated in the hollow space 22.i (in Fig. 8, the annular rigid element 24.1 is shown).

In this example, the annular rigid element 24.i lies loose in the hollow space 22.i (i=1,2,3). The annular seal 22.i is, in this example, connected with the basic housing 14 and is arranged around the agitator 16.i. The connection of the annular seal 20.i with the basic housing 14 is, in this example, realized with the aid of a cap-like member 26.i (26.1 in Fig. 8). This cap-like member 26.i forms part of an agitator housing 28.i (28.1 in Fig. 8), in which a motor coupled with the agitator is accommodated. The basic housing 14 is composed of a fixed housing 15 and the agitator housings 28.i connected with the fixed housing 15. The agitator housing 28.i is detachably mounted to the fixed housing 15 with means known per se, such as bolts and nuts (not shown). The mixing chamber 8.i is provided with a circumferential inner wall 29.i (29.1 in Fig. 8), with the annular seal 20.i lying against this inner wall 29.i to seal the mixing chamber 8.i (i=1,2,3).

In this example, the collecting dish is detachably connected with the basic housing. By removing the collecting dish 4 and the basic housing 14 from each other, the agitators 16.1, 16.2 and 16.3 can leave the mixing chambers 8.1, 8.2 and 8.3 via the agitator openings 13.1, 13.2 and 13.3, respectively.

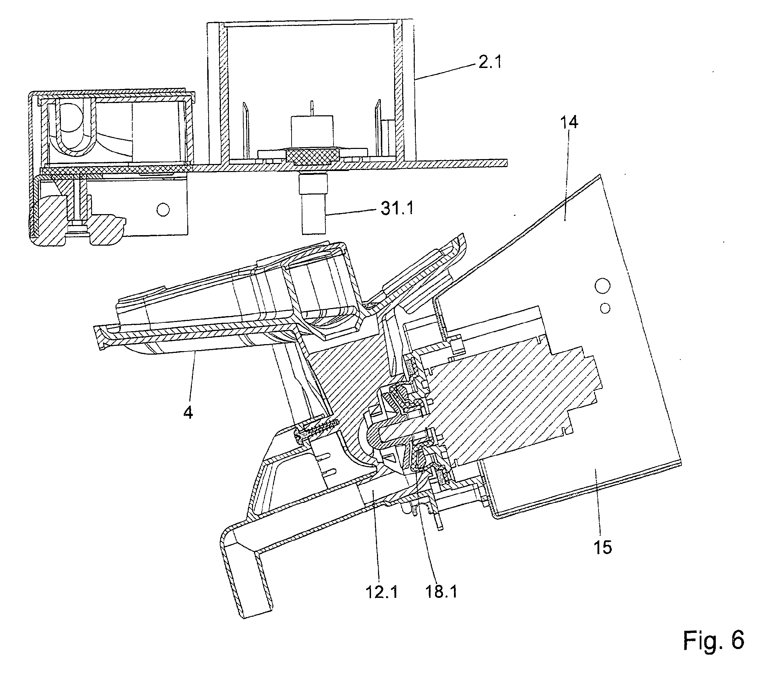

All this is shown in Fig. 5. In Fig. 5, the collecting dish 4 is removed, so that it can be cleaned. Besides, the agitator 16.i can be cleaned and, if desired, be replaced. The collecting dish 4 can then be connected with the basic housing 14 again by hooking it on its lower side, as shown in Fig. 5, and then moving it on its upper side in the direction of the arrow P. The agitator 16.i is then brought via the agitator opening 13.i into the mixing chamber 8.i (i=1,2,3) again. Thus a situation is obtained as shown in Fig. 6. Subsequently, the beverage dispensing units 2.1 and 2.2 can be moved down, as shown in Fig. 7, such that an outlet 31.j (j=1,2) of the beverage dispensing unit 2.i extends into the reservoir 6, as shown in Fig. 7.

The apparatus described to this point operates as follows. With the aid of the beverage dispensing unit 2.1, coffee extract and hot water are supplied to the reservoir 6. Depending on the position of the fluid path selecting unit 9.1, the coffee extract and the hot water flow to the mixing chamber 8.1 or 8.2. With the aid of the beverage dispensing unit 2.2, milk extract and hot water can be supplied to the reservoir 6. Depending on the position of the fluid path selecting unit 9.2, the hot water and the milk extract flow to the mixing chamber 8.2 or 8.3. If the milk extract and the hot water flow to the mixing chamber 8.2 and if the coffee extract and the hot water also flow to the mixing chamber 8.2, coffee with milk is obtained. The mixing chamber 8.1 is, on the other hand, only intended for preparing black coffee, while the mixing chamber 8.3 is only intended for preparing hot milk. In this example, the coffee extract with the hot water is passed from the beverage dispensing unit 2.i to the mixing chamber 8.1. The coffee extract, together with the hot water, enters the reservoir 6 and flows via the fluid inflow opening 10.1 to the mixing chamber 8.1. The agitator 16.1 mixes the hot water with the coffee extract, while, moreover, beating air into the coffee, so that a café crème is formed. Subsequently, the coffee flows out of the mixing chamber 8.1, via the outflow opening 12.1, into, for instance, a cup, after which the coffee is ready for consumption. If desired, sugar may be added.

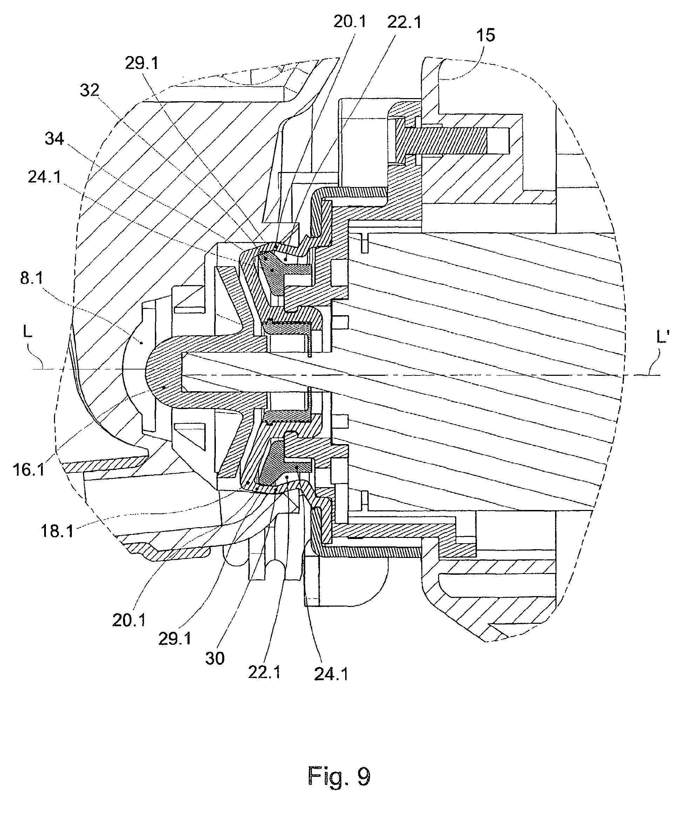

The flexible annular fluid seal 20.i provides a reliable seal of the mixing chamber. As shown in Fig. 8, the agitator housing 28.1 is positioned perfectly symmetrically with respect to the mixing chamber 8.1. This means that an axial axis L of the mixing chamber coincides with an axial axis L' of the agitator 16.i. If, however, the agitator housing 28.i is not connected with the basic housing 14 in the right position, the flexible annular fluid seal 20.i provides a good seal yet. This is shown in Fig. 9. From this it appears that the agitator housing 28.1, in the plane of the drawing, is located a bit lower than is shown in Fig. 8. A lower side 30 of the flexible annular fluid seal 20.i is then pressed up relatively a bit by the circumferential inner wall 29.1 of the mixing chamber. The rigid element 24.i is then pressed up relatively a bit as well (compare Fig. 9 with Fig. 8). This means that an upper side 32 of the annular rigid element 24.i presses up an upper side 34 of the flexible annular fluid seal 20.1, with the result that yet this upper side 34 lies well against the circumferential inner wall 29.i of the mixing chamber and thus ensures a good seal. Without the circumferential rigid element 24.i, the lower side 30 of the flexible annular fluid seal would form a seal, to be sure, but the upper side 34 would not do so, because it would not lie against the circumferential inner wall 29.i. The rigid element 24.i therefore has the result that also when, for whatever reason, the fluid seal 18.i is not quite well aligned with respect to the associated mixing chamber 8.i, yet a proper seal is obtained. In particular because the present apparatus is provided with three agitators with three mixing chambers, the situation may arise that the three agitators, that is to say the agitator housings 28.i, are not quite correctly attached with respect to each other to the fixed housing 15, the more so as these agitators are of exchangeable design. The agitators comprise electromotors which, in special cases, must be replaceable. When such an alignment has not been carried out quite correctly, this is no problem because the fluid seal 18.i according to the invention, in that case, yet provides a right seal.

The invention is in no way limited to the above-described embodiments. Thus, the fluid seal 18.i may also be rigidly connected with the mixing chamber 18.i, instead of with the agitator housing 28.1. The fluid seal is then still located between the mixing chamber, on the one hand, and the basic housing 14, which also comprises the respective agitator housings, on the other hand. Besides, the apparatus may be provided with other numbers of mixing chambers than the three discussed before. Also, the fluid seal 20.i may be connected with the fixed housing 15, while extending around the agitator housing 28.i.

Such variants are each deemed to fall within the scope of the invention as defined in the appended claims.

## Claims

1. An apparatus (1) for preparing at least one beverage suitable for consumption, provided with at least one beverage dispensing unit (2), a collecting dish (4) with a reservoir (6) for collecting in the reservoir beverage and/or ingredients therefor dispensed by the at least one beverage dispensing unit, at least one agitator (16.1;16.2;16.3) connected with a basic housing (14) of the apparatus, the collecting dish (4) being provided with at least one mixing chamber, the agitator being located in the mixing chamber (8.1;8.2;8.3), the mixing chamber further being provided with a fluid inflow opening (10.X;10.2;10.3), which is in fluid communication with the reservoir (6) for supply of the beverage and/or ingredients collected in the reservoir to the mixing chamber (8.1;8.2;8.3), and an outflow opening (12.1;12.2;12.3) for dispensing beverage agitated by the at least one agitator, the mixing chamber further being provided with an agitator opening (13.1;13.2;13.3) and the collecting dish (4) being detachably connected with the basic housing (14), so that by removing the dish and the basic housing from each other the agitator can leave the mixing chamber via the agitator opening, and the apparatus further being provided with a fluid seal (18.1;18.2;18.3), extending around the agitator opening (13.1;13.2;13.3), between the at least one mixing chamber (8.1;8.2;8.3) and the basic housing (14) for obtaining a fluid-tight connection between the basic housing and the mixing chamber, wherein the fluid seal (18.1;18.2;18.5) is provided with at least one flexible annular fluid seal (20.1;20.2;20.3) between the at least one mixing chamber and the basic housing for obtaining the fluid-tight connection between the basic housing and the mixing chamber, **Characterized in that** the annular seal (20.1,20.2;20.3) being of hollow design and thus comprising an annular hollow space (22.1;22.2;22.3), and the fluid seal (18.1;18.2;18.3) further being provided with an annular rigid element (24.1;24.2;24.3) which is freely movably accommodated in the hollow space.

2. An apparatus according to claim 1, **characterized in that** the annular rigid element (24.1;24.2;24.3) lies loose in the hollow space (22.1;22.2;22.3).

3. An apparatus according to any one of the preceding claims, **characterized in that** the annular seal (20.1;20.2;20.3) is connected with the basic housing (4) and is arranged around the agitator opening (13.1;13.2;13.3).

4. An apparatus according to any one of the preceding claims, **characterized in that** the basic housing (14) is composed of a fixed housing (15) and an agitator housing (28.1;28.2;28.3) which are mounted together, with the agitator (16) being connected with the agitator housing

5. An apparatus according to claim 4, **characterized in that** the at least one agitator housing (28.1;28.2;28.3) is detachably mounted to the apparatus.

6. An apparatus according to any one of the preceding claims, **characterized in that** the mixing chamber (8.1;8.2;8.3) is provided with a circumferential inner wall (29.1;29.2;29.3), with the annular seal (20.1;20.2;20.3) lying against this inner wall to seal the mixing chamber.

7. An apparatus according to any one of the preceding claims, **characterized in that** the apparatus is provided with at least two agitators (16) spatially separated from each other which are connected with the basic housing (14), the collecting dish (4) being provided with at least two mixing chambers (8.1;8.2;8.3), in each mixing chamber one of the said agitators being accommodated, and each pair of one of the mixing chambers with associated agitator being provided with one of the said annular seals (20.1;20.2;20.3).

## Patentansprüche

1. Vorrichtung (1) zum Zubereiten mindestens eines für den Verzehr geeigneten Getränks, versehen mit mindestens einer Getränkeausgabeeinheit (2), einer Sammelschale (4) mit einem Behälter (6) zum Sammeln von aus der mindestens einen Getränkeausgabeeinheit ausgegebenem Getränk und/oder Zutaten für dieses in dem Behälter, mindestens einem Mischer (16.1; 16,2; 16.3), der mit einem Grundgehäuse (14) der Vorrichtung verbunden ist, wobei die Sammelschale (4) mit mindestens einer Mischkammer versehen ist, wobei der Mischer in der Mischkammer (8.1; 8.2; 8.3) angeordnet ist, wobei die Mischkammer ferner mit einer Fluideinströmöffnung (10.1; 10.2; 10.3), die in Fluidverbindung mit dem Behälter (6) steht, um das in dem Behälter gesammelte Getränk und/oder die Zutaten an die Mischkammer (8.1; 8.2; 8.3) auszugeben, und einer Ausströmöffnung (12.1; 12.2; 12.3) zum Ausgeben von durch den mindestens einen Mischer gemischtem Getränk versehen ist, wobei die Mischkammer ferner mit einer Mischeröffnung (13.1; 13.2; 13.3) versehen ist und die Sammelschale (4) lösbar mit dem Grundgehäuse (14) verbunden ist, so dass der Mischer durch Abnehmen der Schale und des Grundgehäuses voneinander über die Mischeröffnung aus der Mischkammer entnehmbar ist, und wobei die Vorrichtung ferner mit einer sich um die Mischeröffnung (13.1; 13.2; 13.3) herum erstreckenden Fluiddichtung (18.1; 18.2; 18.3) zwischen der mindestens einen Mischkammer (8,1; 8.2; 8.3) und dem Grundgehäuse (14) versehen ist, um eine fluiddichte Verbindung zwischen dem Grundgehäuse und der Mischkammer zu erhalten, wobei die Fluiddichtung (18.1; 18.2; 18.3) mit mindestens einer flexiblen ringförmigen Fluiddichtung (20.1; 20.2; 20.3) zwischen der mindestens einen Mischkammer und dem Grundgehäuse versehen ist, um die fluiddichte Verbindung zwischen dem Grundgehäuse und der Mischkammer zu erhalten, **dadurch gekennzeichnet, dass** die Ringdichtung (20.1; 20.2; 20.3) hohl ausgebildet ist und somit einen ringförmigen Hohlraum (22.1; 22.2; 22.3) aufweist, und die Fluiddichtung (18.1; 18.2; 18.3) ferner mit einem ringförmigen starren Element (24.1; 24.2; 24.3) versehen ist, das frei bewegbar in dem Hohlraum aufgenommen ist.

2. Vorrichtung nach Anspruch 1, **dadurch gekennzeichnet, dass** das ringförmige starre Element (24.1; 24.2; 24.3) lose in dem Hohlraum (22.1; 22.2; 22.3) liegt.

3. Vorrichtung nach einem der vorhergehenden Ansprüche, **dadurch gekennzeichnet, dass** die Ringdichtung (20.1; 20.2; 20.3) mit dem Grundgehäuse (14) verbunden und um die Mischeröffnung (13.1; 13.2; 13.3) herum angeordnet ist.

4. Vorrichtung nach einem der vorhergehenden Ansprüche, **dadurch gekennzeichnet, dass** das Grundgehäuse (14) aus einem festen Gehäuse (15) und einem Mischergehäuse (28,1; 28.2; 28.3) besteht, die zusammengesetzt sind, wobei der Mischer (16) mit dem Mischergehäuse verbunden ist.

5. Vorrichtung nach Anspruch 4, **dadurch gekennzeichnet, dass** das mindestens eine Mischergehäuse (28.1; 28.2; 28.3) lösbar an der Vorrichtung angebracht ist.

6. Vorrichtung nach einem der vorhergehenden Ansprüche, **dadurch gekennzeichnet, dass** die Mischkammer (8.1; 8.2; 8.3) mit einer Innenumfangswand (29.1; 29.2; 29.3) versehen ist, wobei die Ringdichtung (20.1; 20.2; 20.3) an dieser Wand anliegt, um die Mischkammer abzudichten.

7. Vorrichtung nach einem der vorhergehenden Ansprüche, **dadurch gekennzeichnet, dass** die Vorrichtung mit mindestens zwei räumlich voneinander getrennten Mischern (16) versehen ist, welche mit dem Grundgehäuse (14) verbunden sind, wobei die Sammelschale (4) mit mindestens zwei Mischkammern (8.1; 8.2; 8.3) versehen ist, wobei in jeder Mischkammer einer der Mischer aufgenommen ist, und wobei jedes Paar aus einer der Mischkammern und dem zugehörigen Mischer mit einer der Ringdichtungen (20.1; 20.2; 20.3) versehen ist.

## Revendications

1. Appareil (1) pour préparer au moins une boisson consommable, comportant au moins une unité distributrice de boisson (2), un plateau collecteur (4) avec un réservoir (6) pour recueillir dans le réservoir la boisson et/ou des ingrédients distribués pour celui-ci par l'au moins une unité distributrice de boisson, au moins un agitateur (16.1 ; 16.2 ; 16.3) relié à un logement de base (14) de l'appareil, le plateau collecteur (4) comportant au moins une chambre de mélange, l'agitateur étant situé dans la chambre de mélange (8.1 ; 8.2 ; 8.3), la chambre de mélange comportant en outre une ouverture d'entrée de fluide (10.1 ; 10.2 ; 10.3), qui est en communication de fluide avec le réservoir (6) pour fournir la boisson et/ou les ingrédients collectés dans le réservoir à la chambre de mélange (8.1 ; 8.2 ; 8.3), et un orifice de sortie (12.1 ; 12.2 ; 12.3) pour fournir la boisson agitée par l'au moins un agitateur, la chambre de mélange comportant en outre une ouverture d'agitateur (13.1 ; 13.2 ; 13.3) et le plateau collecteur (4) étant relié de façon amovible au logement de base (14), de sorte que, en enlevant le plateau et le logement de base l'un de l'autre, l'agitateur peut sortir de la chambre de mélange via l'ouverture d'agitateur, et l'appareil comportant en outre un joint à fluide (18.1 ; 18.2 ; 18.3) s'étendant autour de l'ouverture d'agitateur (13.1 ; 13.2 ; 13.3), entre l'au moins une chambre de mélange (8.1 ; 8.2 ; 8.3) et le logement de base (14) pour obtenir une liaison étanche aux fluides entre le logement de base et la chambre de mélange, dans lequel le joint à fluide (18.1 ; 18.2 ; 18.3) comporte au moins un joint à fluide annulaire flexible (20.1 ; 20.2 ; 20.3) entre l'au moins une chambre de mélange et le logement de base pour obtenir une liaison étanche aux fluides entre le logement de base et la chambre de mélange, **caractérisé par le fait que** le joint annulaire (20.1 ; 20.2 ; 20.3) est creux de conception et comprend ainsi un espace creux annulaire (22.1 ; 22.2 ; 22.3), et le joint à fluide (18.1 ; 18.2 ; 18.3) comporte en outre un élément rigide annulaire (24.1 ; 24.2 ; 24.3) qui est logé dans l'espace creux de façon librement mobile.

2. Appareil selon la revendication 1, **caractérisé par le fait que** l'élément rigide annulaire (24.1 ; 24.2 ; 24.3) repose de façon libre dans l'espace creux (22.1 ; 22.2 ; 22.3).

3. Appareil selon l'une quelconque des revendications précédentes, **caractérisé par le fait que** le joint annulaire (20.1 ; 20.2 ; 20.3) est relié au logement de base (4) et est disposé autour de l'ouverture d'agitateur (13.1 ; 13.2 ; 13.3).

4. Appareil selon l'une quelconque des revendications précédentes, **caractérisé par le fait que** le logement de base (4) est composé d'un logement fixe (15) et d'un logement d'agitateur (28.1 ; 28.2 ; 28.3) qui sont montés ensemble, l'agitateur (16) étant relié au logement d'agitateur.

5. Appareil selon la revendication 4, **caractérisé par le fait que** l'au moins un logement d'agitateur (28.1 ; 28.2 ; 28.3) est monté de façon amovible sur l'appareil.

6. Appareil selon l'une quelconque des revendications précédentes, **caractérisé par le fait que** la chambre de mélange (8.1 ; 8.2 ; 8.3) comporte une paroi interne circonférentielle (29.1 ; 29.2 ; 29.3), le joint annulaire (20.1 ; 20.2 ; 20.3) étant en appui contre la paroi interne pour sceller la chambre de mélange.

7. Appareil selon l'une quelconque des revendications précédentes, **caractérisé par le fait que** l'appareil comporte au moins deux agitateurs (16), séparés spatialement l'un de l'autre, qui sont reliés au logement de base (14), le plateau collecteur (4) comportant au moins deux chambres de mélange (8.1 ; 8.2 ; 8.3), dans chaque chambre de mélange étant logé l'un des dits agitateurs, et chaque paire de l'une des chambres de mélange avec l'agitateur associé comportant l'un des dits joints annulaires (20.1 ; 20.2 ; 20.3).
